(19) Europäisches Patentamt
European Patent Office
Office européen des brevets

(11) Numéro de publication : **0 255 439 B1**

## (12) FASCICULE DE BREVET EUROPEEN

(45) Date de publication du fascicule du brevet :
09.01.91 Bulletin 91/02

(51) Int. Cl.⁵ : **B29C 65/02**, E06B 9/06, B29C 53/06

(21) Numéro de dépôt : **87401749.4**

(22) Date de dépôt : **27.07.87**

(54) Procédé de fabrication de rideaux souples de toute dimension.

(30) Priorité : 29.07.86 FR 8610743

(43) Date de publication de la demande :
03.02.88 Bulletin 88/05

(45) Mention de la délivrance du brevet :
09.01.91 Bulletin 91/02

(84) Etats contractants désignés :
AT BE CH DE ES FR GB IT LI LU NL SE

(56) Documents cités :
EP-A- 0 076 349
EP-A- 2 167 516
CH-A- 455 229
DE-A- 3 312 822

(56) Documents cités :
FR-A- 2 167 516
GB-A- 1 239 579
US-A- 3 292 685
US-A- 3 583 465

(73) Titulaire : NERGECO S.A.
B.P. 6 1, rue du Château
F-43220 Dunières (FR)

(72) Inventeur : Kraeutler, Bernard
1 rue du Château, B.P. No. 6
F-43220 Dunières (FR)

(74) Mandataire : Pinguet, André
Cabinet de Proprieté Industrielle CAPRI 28
bis, avenue Mozart
F-75016 Paris (FR)

## Description

La présente invention a pour objet un procédé de fabrication de rideaux souples de toutes dimensions, selon le préambule de la revendication indépendante 1.

Cette invention concerne en particulier les rideaux souples pour les portes de manutention. Comme leur nom le suggère, les portes de manutention sont installées sur des bâtiments, tels que des usines et les entrepôts, ou une circulation importante entre l'intérieur et l'extérieur est nécessaire. Le but de ces portes est d'offrir un écran thermique, c'est-à-dire de réduire les échanges thermiques entre l'intérieur et l'extérieur, sans pour autant gêner le passage des véhicules de manutention. Pour ces raisons, les portes de ce type sont à actionnement rapide, tant à l'ouverture, – pour livrer le passage aux usagers quasi instantanément –, qu'à la fermeture, – pour limiter au maximum le temps de contact entre les masses d'air intérieure et extérieure –. Au plan des réalisations matérielles, l'impératif de la rapidité d'actionnement a conduit à développer des portes à rideau relevable fabriqué dans un matériau léger, tel que, typiquement, la toile, la toile plastifiée ou le film plastique.

Eu égard aux bâtiments sur lesquels elles sont le plus fréquemment installées (usines, entrepôts, etc), quel que soit le mode de levage du rideau adopté, – enroulement autour d'un arbre surplombant l'ouverture, pliage en accordéon au moyen de sangles s'enroulant autour d'un arbre surplombant l'ouverture, enroulement autour d'une barre fixée au bord inférieur du rideau, également au moyen de sangles s'enroulant autour d'un arbre surplombant l'ouverture –, le rideau de ces portes est généralement de grande dimension, et il importe de le rigidifier à intervalles réguliers par des barres d'armature horizontales. De façon usuelle, pour assujettir les barres d'armature au rideau souple, on fixe audit rideau, à intervalles réguliers, des fourreaux horizontaux dans lesquels on introduit lesdites barres d'armature.

Eu égard d'autre part au trafic assez dense que les portes de manutention laissent passer et pour prévenir les collisions qui pourraient se produire entre deux véhicules se présentant simultanément de part et d'autre d'un rideau opaque, on pratique généralement dans le rideau de ces portes, sur une partie de leur hauteur, des fenêtres que l'on garnit d'un matériau plastique souple transparent.

Le brevet US 3 292 685, ayant servi le bas pour le préambule de la revendication 1, décrit un tel rideau relevable en matériau en feuille souple qui comporte des lés qui se chevauchent sur une certaine longueur, de façon qu'avec deux coutures, une sur chaque bord de la bande de chevauchement, on forme un fourreau permettant d'y glisser une barre d'armature.

A la lecture de ce qui précède, on imagine aisément que la fabrication, à partir d'un rouleau de toile plastifiée de largeur déterminée, d'un rideau pour porte de manutention faisant plusieurs mètres dans chaque dimension et comportant des fourreaux horizontaux pour loger des barres d'armature ainsi que, éventuellement, des fenêtres pour permettre une visibilité minimale, est une opération assez complexe.

Le brevet FR-A-72.43132 (2 167 516) décrit un dispositif de fabrication d'articles à joint à partir de feuilles avec une table à plateau rectangulaire, avec des moyens d'assujettissement déplaçables selon trois axes orthogonaux et solidaires d'une structure surplombant ladite table, et permettant de réaliser l'assemblage et la réunion de lés parallèles.

L'invention a pour but un procédé pour fabriquer des portes du genre en question, qui soit rationnel et économique, répétitif avec exactitude, de façon à standardiser les produits. L'invention a également pour objet de permettre une fabrication plus ordonnée et plus rapide pour réduire les délais d'exécution des commandes.

Selon l'invention, un procédé de fabrication d'un rideau relevable verticalement en matériau en feuille souple de largeur L rigidifié à intervalles réguliers par des barres d'armature horizontales placées dans des fourreaux formés dans le rideau, du type des rideaux de porte de manutention, le rideau étant constitué principalement de lés parallèles, les fourreaux étant formés aux niveaux des jonctions entre les lés, et comportant des premiers et des seconds rubans assujettis aux lés de part et d'autre du rideau au niveau desdites jonctions pour recouvrir lesdits fourreaux, les lés et les rubans ayant une longueur sensiblement égale à la largeur L du rideau, est caractérisé en ce qu'il comporte les étapes suivantes :

– on dispose des premiers rubans sur un plan de référence, parallèlement entre eux, à une distance entre eux égale à la largeur des lés, et avec leurs extrémités alignées ;

– on dispose sur le plan de référence les lés entre lesdits premiers rubans, les bords des lés recouvrant les bords des bandes sur une largeur de surface de recouvrement ;

– on dispose des seconds rubans sur les premiers, les bords des seconds rubans recouvrant sur une largeur de surface de recouvrement les bords desdits lés ;

– on assujettit les lés et les rubans qui les prennent en sandwich, sur deux lignes d'assujettissement formées sur les surfaces de recouvrement.

Le procédé selon l'invention permet en particulier d'utiliser des lés de largeurs réduites, d'une manipulation aisée, et en outre, des lés transparents, constituant entre les fourreaux des zones de clarté et de visibilité, tout en gardant des zones opaques aux niveaux des fourreaux, ce qui est préférable au plan esthétique et de la solidité.

Selon une caractéristique de l'invention, ce procédé comporte en outre, après l'étape d'assujettissement des lés (ou des lés et des rubans) les uns aux autres, les étapes de :

    – plier le rideau en accordéon, un pli étant formé au niveau de chaque fourreau et au milieu de chaque lé ;

    – étuver le rideau ainsi plié pour provoquer une déformation irréversible du matériau souple dont est fait ledit rideau au niveau de chaque pli.

D'autres particularités et avantages de la présente invention apparaîtront mieux à la lecture de la description qui va suivre, faite en relation avec les dessins annexés, sur lesquels :

    la figure 1 est une vue de dessus schématique d'un rideau souple selon l'invention, en cours de fabrication ;

    la figure 2 est une vue en coupe schématique d'un rideau reposant sur une table et réalisé conformément à la présente invention ;

    La figure 3 est une vue en coupe schématique d'un autre type de rideau selon l'invention, selon un plan perpendiculaire aux barres d'armatures dudit rideau ;

    La figure 4 est une vue en coupe schématique d'un autre type de rideau selon l'invention, selon un plan perpendiculaire aux barres d'armatures dudit rideau ;

    La figure 5 est une vue en coupe schématique d'un autre type de rideau selon l'invention, selon un plan perpendiculaire aux barres d'armatures dudit rideau ; et

    La figure 6 est une vue en coupe schématique d'une variante du rideau représenté sur la figure 2, selon un plan perpendiculaire aux barres d'armatures dudit rideau.

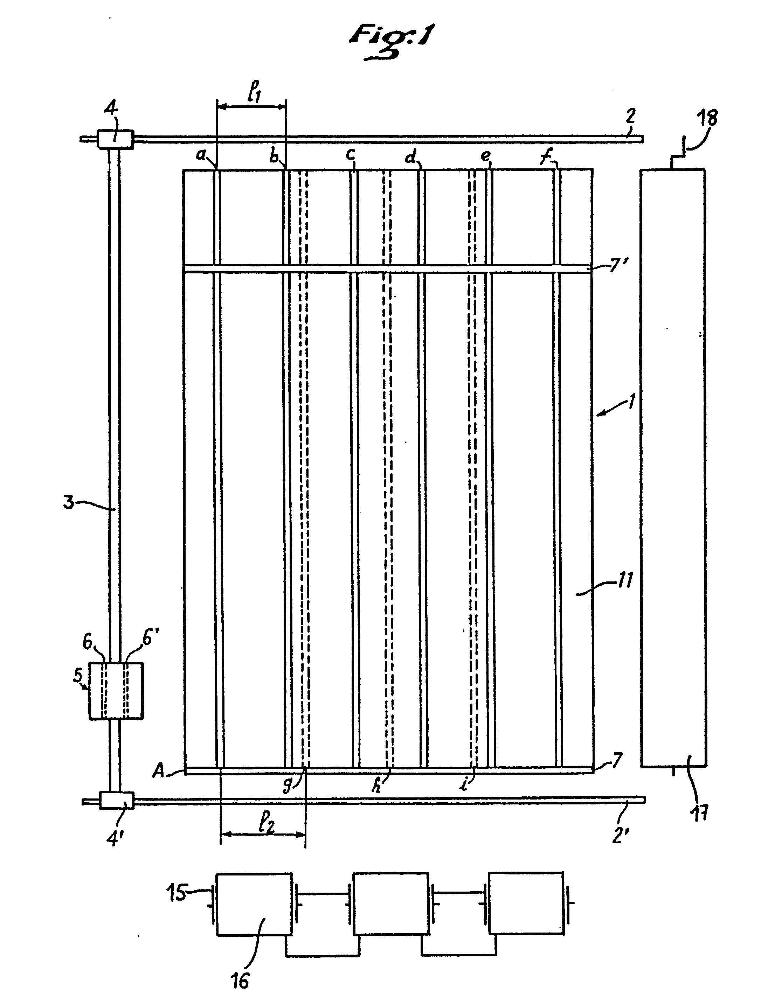

Sur la figure 1, on voit que le dispositif pour la fabrication de rideaux souples de portes de manutention comporte une table rectangulaire 1 qui est surplombée par deux rails 2, 2′ parallèles à la largeur de ladite table. Ces rails, non plus que la structure fixe (non représentée) à laquelle ils sont assujettis, ne sont fixés ni ne prennent appui sur le plateau 11 de la table 1, qui doit rester totalement dégagé. Les rails 2, 2′ servent au support et au guidage d'une poutre 3 qui leur est perpendiculaire et dont les extrémités sont munies de moyens de roulement 4, 4′. L'un au moins de ces moyens de roulement 4, 4′ est muni d'un moteur qui l'entraîne et provoque le déplacement de la poutre 3. La poutre 3 sert au support et au guidage d'un poste de soudage 5 (ou de couture ou de collage ou équivalent ; dans la suite, on ne parlera que de soudage mais il est entendu tout moyen d'assujettissement approprié à la fixation les unes aux autres de feuilles ou plaques de matériau souple peut être utilisé). Le poste de soudage 5 comporte des moyens de roulement, un moteur, un dispositif de translation verticale et au moins un patin de soudage 6, 6′. Il peut ainsi se déplacer sur toute la longueur de la poutre 3 et s'abaisser de façon que ses patins de soudage 6,

6′ viennent au contact de la surface supérieure du plateau 11. Les patins 6, 6′ sont orientables dans un plan parallèle au plan du plateau 11 et peuvent en particulier être bloqués dans une direction parallèle ou perpendiculaire à la largeur de la table 1. Avantageusement, le poste de soudage 5 comporte deux patins de soudage 6, 6′ parallèles (cas de la figure), pour des raisons qui apparaîtront plus loin. L'écartement des rails 2, 2′ ainsi que la course de la poutre 3 sur lesdits rails sont tels que le poste de soudage 5 peut balayer toute la surface du plateau 11. Le plateau 11, qui repose sur un support (non représenté), présente une surface supérieure rigide et parfaitement plane. Usuellement, il fait plusieurs mètres dans les deux dimensions. Avantageusement, sa longueur est approximativement égale à la largeur des rideaux de plus grande largeur fabriqués usuellement. Sa largeur représente une fraction de la hauteur des rideaux de plus grande hauteur fabriqués usuellement. Techniquement, il est possible de réaliser des tables 1 comportant des plateaux 11 ayant la superficie des plus grands rideaux fabriqués. Dans la pratique, cependant, on n'envisage pas de construire de telles tables, et pour des raisons de coût et, surtout, pour des raisons d'encombrement. Le plateau 11 peut comporter une ou plusieurs séries de rainures équidistantes, parallèles à son grand côté et dont l'écartement correspond à l'espacement ou aux espacements standard(s) des barres d'armature des rideaux. A titre d'exemple, on a représenté sur la figure 1 deux séries de rainures, une première série étant constituée de six rainures a, b, c, d, e et f, distantes de $l_1$ et une seconde série de cinq rainures a, g, h, i et f, distantes de $l_2$. Comme on le verra plus loin, ces rainures ne sont pas indispensables à la fabrication des rideaux selon l'invention. Deux organes de maintien, comportant chacun une règle rigide 7, 7′ perpendiculaire aux rainures a à i, permettent d'assujettir la portion de rideau en cours de fabrication au plateau 11. Ces organes de maintien sont solidaires du plateau 11 sur lequel ils sont déplaçables, leur règle restant perpendiculaire aux rainures du plateau 11, c'est à dire au grand côté dudit plateau. Le dispositif de fabrication de rideau selon l'invention comporte en outre une série de dévidoirs 15 destinés à supporter des rouleaux 16 d'un matériau souple utilisé pour la confection des rideaux ainsi qu'un enrouleur 17 sur lequel la portion de rideau occupant le plateau 11 est, après son achèvement, enroulée pour dégager ledit plateau et permettre la fabrication de la portion de rideau suivante et son raccordement à la partie de rideau achevée. L'axe des dévidoirs 15 est perpendiculaire aux rainures du plateau 11. Ces dévidoirs sont prévus pour supporter des rouleaux de différentes largeurs appropriés à la fabrication des différents rideaux réalisables conformément au procédé selon l'invention. L'enrouleur 17 comporte un cylindre d'axe parallèle aux rainures du plateau 11 et sensiblement de même longueur. Ce cylindre est supporté à chacune de ses extrémités de façon à pouvoir tourner autour de son axe. Il est entraîné en rotation soit manuellement (manivelle 18) soit par un moteur.

Avantageusement, le déplacement du poste de soudage 5 sur la poutre 3 et selon un axe vertical, ainsi que celui de la poutre 3 sur les rails 2, 2' sont commandés automatiquement par une unité programmable (non représentée), conformément aux données fournies préalablement à ladite unité, telles que la distance entre les rainures ($l_1$ ou $l_2$), la largeur du rideau (c'est-à-dire, comme on le verra plus loin, la distance séparant les faces des règles 7, 7' situées en vis à vis), etc.

Le fonctionnement du dispositif décrit ci-dessus va être expliqué dans ce qui va suivre concurremment avec le procédé de fabrication selon l'invention, et ce, à propos de la fabrication de quatre types de rideaux différents.

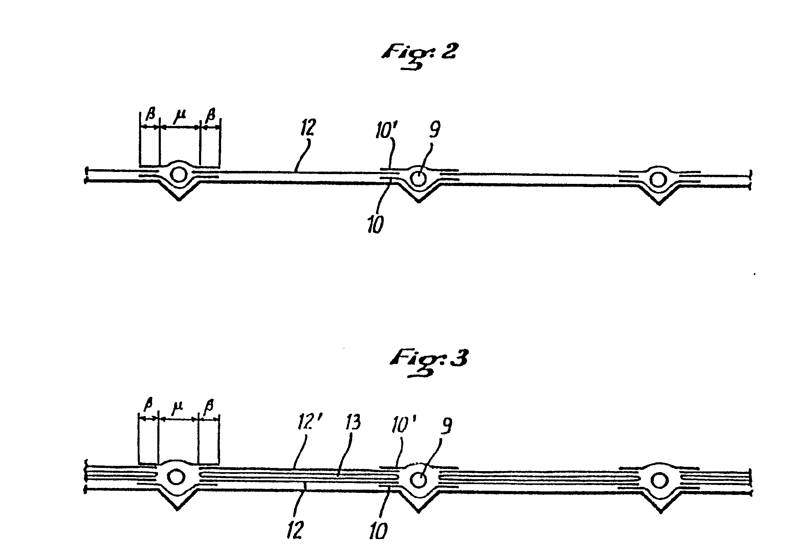

Sur la figure 2, on a représenté une vue en coupe schématique d'un rideau selon la présente invention pouvant être opaque, ou partiellement ou totalement transparent, réalisé au moyen du dispositif représenté sur la figure 1, c'est à dire comportant un plateau 11 rainuré. Pour fabriquer ce rideau, on découpe d'une part des rubans de toile plastifée 10 d'une largeur de $\mu+2\beta$ ($\mu$ étant la largeur d'un fourreau et $\beta$ la largeur de la bande de recouvrement nécessaire au soudage) et d'une longueur légèrement supérieure à la largeur L du rideau. D'autre part, on découpe des lés 12 de toile plastifiée, ou d'un matériau transparent, d'une largeur approximativement égale à $l_1$ diminuée de $\mu$, et d'une longueur légèrement supérieure à la largeur L du rideau. On dispose sur chacune des rainures a à f du plateau 11 un premier ruban 10, que l'on aligne sur le bord A dudit plateau et que l'on centre sur chacune desdistes rainures. On place dans chaque rainure, sur les rubans 10, une barre d'armature 9. On dispose ensuite entre deux rainures consécutives, un lé 12 que l'on centre de façon que chacun de ses bords latéraux recouvre le ruban 10 contigu sur une bande de largeur $\beta$. Pour finir, on place sur chacune des barres d'armature 9, un second ruban 10' que l'on centre de façon que chacun de ses bords latéraux recouvre le lé 12 contigu sur une bande de largeur $\beta$. Cette phase de positionnement achevée, on procède au soudage du morceau de rideau présent sur le plateau 11. Ce procédé est particulièrement avantageux en ce qu'il permet de réaliser des rideaux totalement transparents ou comportant des zones transparentes de superficie maximale (si on décide de ne rendre le rideau transparent que sur une fraction de sa hauteur), inconnus de l'art antérieur. Un rideau de ce type est fabriqué rapidement et ne requiert qu'une main d'oeuvre minimale dans la mesure où, notamment, la découpe préliminaire des rubans 10 et des lés 11 se limite, avec des rouleaux de toile plastifiée ou de matériau transparent fournis à la largeur souhaitée, à un sectionnement transversal. En outre ce rideau est d'un équerrage rigoureux et ne comporte pas de zones fragilisées par, notamment, des soudures verticales intermédiaires.

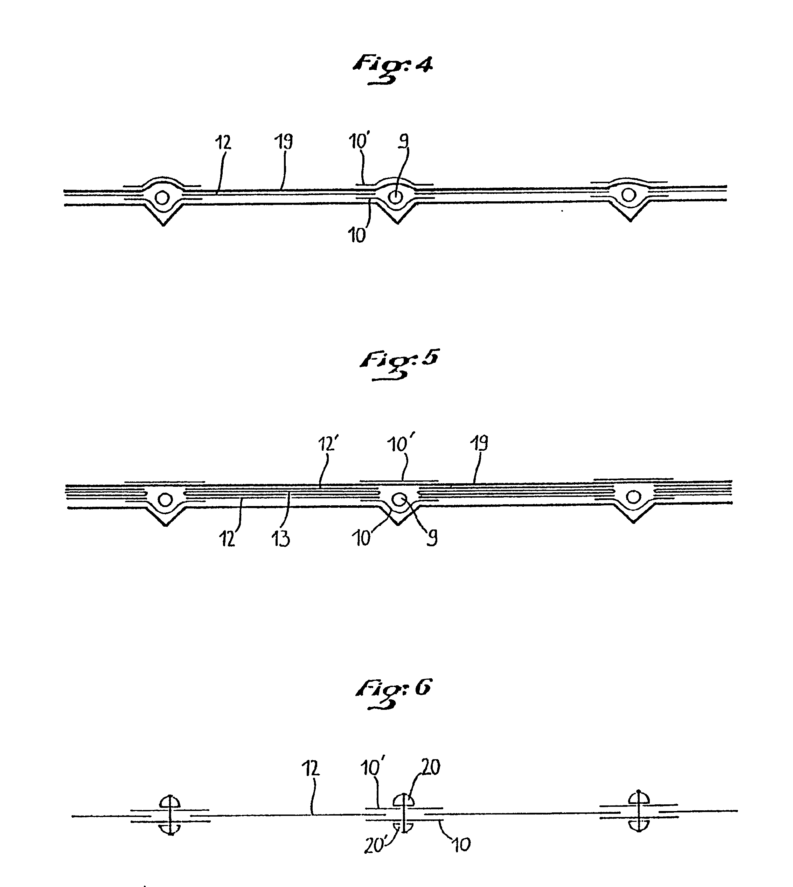

Le rideau représenté en coupe schématique sur la figue 3 est obtenu par le procédé de fabrication décrit à propos du rideau représenté sur la figue 2. Il diffère de ce précédent rideau en ce que, sur un premier lé 12, on dispose une ou plusieurs couches 13 faites d'un matériau isolant (une sur la figure 3, ce nombre étant arbitraire), de même longueur et de largeur légèrement inférieure ou, indifféremment, de même largeur, le poste de soudage 5 étant prévu pour souder au moins cinq épaisseurs de toile plastifiée, de matériau transparent ou de matériau isolant. Sur cette couche 13, on place ensuite un second lé 12'. Pour finir, on recouvre chaque barre d'armature 9 d'un ruban 10' chevauchant deux lés 12' supérieurs consécutifs et on soude l'ensemble. Les lés 12 peuvent être faits de toile plastifiée ou de matériau transparent. Dans ce dernier cas, on pratique des découpes circulaires ou polygonales dans les couches 13 faites de matériau isolant de façon à assurer une visibilité minimale et à constituer un matelat d'air isolant. Le procédé original qui vient d'être décrit permet de réaliser un rideau du genre de celui qui est décrit dans le brevet américain 4 397 347.

Pour la réalisation des rideaux des figures 2 et 3, si l'on utilise le collage comme moyen d'assujettissement, on encolle chaque pièce du rideau (ruban ou lé) sur sa surface supérieure après qu'on l'a positionnée sur la pièce sous jacente et avant de la recouvrir par la pièce immédiatement supérieure.

Sur les figures 4 et 5, on a représenté deux rideaux proches respectivement des rideaux des figures 2 et 3 et s'en distinguant en ce qu'ils comportent des sangles d'équidistance 19. Conformément au brevet français 2 539 181, on fixe aux rideaux souples de grande dimension, en particulier au rideaux qui sont alourdis par une série de barres d'armature horizontales, au moins deux sangles d'équidistances destinées à empêcher le rideau de fluer et à maintenir l'équidistance des barres d'armatures. Selon le procédé de fabrication de l'invention, après qu'on a mis les lés 12 en place (figure 2) ou 12' (figure 3), on dispose perpendiculairement auxdits lés au moins deux sangles 19 faites avantageusement de fibres synthétiques tressées. Ensuite, on positionne, comme décrit précédemment, un ruban 10' sur chaque barre 9 de façon qu'il chevauche identiquement deux lés 12 (ou 12') voisins. Le soudage des rideaux des figures 4 et 5 se fait comme celui des rideaux des figures 2 et 3. A la suite de ce soudage, les sangles 19 sont fixées au rideau en deux points au niveau de chacun des fourreaux.

Pour la réalisation des rideaux représentés sur les figures 2 à 5, si l'on utilise une table dont le plateau 11 ne comporte pas de rainures, on soude les différents éléments du rideau (savoir les lés 12, 12', les rubans 10, 10' et les éventuelles couches isolantes 13 et sangles d'équidistances 19) les uns aux autres sans avoir disposé préalablement les barres d'armature, relativement auxdits éléments, aux emplacements où le soudage délimitera des fourreaux. Les barres d'armature ne seront introduites dans ces fourreaux qu'une fois le rideau achevé.

L'obturation de certains locaux requiert des installations devant satisfaire à certaines prescriptions. Ainsi, dans les entrepôts destinés à contenir des denrées périssables, on évite au maximum tous les matériels qui présenteraient des parties inaccessibles ou difficilement accessibles à des désinfections régulières. C'est le cas des fourreaux contenant les barres d'armatures disposées sur les rideaux décrits plus haut. Pour rendre de tels rideaux propres à de tels usages, on prévoit deux solutions. Une première solution consiste à couper les barres d'armature à une longueur sensiblement inférieure à la largeur du rideau et à fermer, par soudage, les extrémités des fourreaux. Une autre solution consiste à fermer, par soudage, les extrémités des fourreaux sans y glisser de barre d'armature. Et pour rigidifier le rideau, on utilise des barres faites de deux parties 20, 20' que l'on fixe l'une à l'autre le long des rubans 10, 10' de façon qu'elles prennent le rideau en sandwich, selon la disposition représentée sur la figure 6.

Lorsqu'ils sont destinés à équiper une porte accordéon, les rideaux selon l'invention peuvent être, après fabrication par le procédé qui a été décrit plus haut, préformés de façon à se plier facilement lors de leur levage. Pour ce faire, une fois le soudage de la dernière portion de rideau achevé, on plie le rideau entier, que l'on n'a pas encore muni de ses barres d'armature, en accordéon de façon à former un pli au niveau de chaque fourreau et au milieu de chaque lé. Ensuite, on étuve le rideau ainsi plié à une température suffisante pour provoquer une déformation irréversible de la texture du matériau dont est fait le rideau, au niveau de chacun des plis. Un rideau ainsi préformé prendra toujours le pli qui lui a été imprimé initialement.

Selon une caractéristique avantageuse du poste de soudage 5, les soudures résultant de l'application des patins de soudages 6, 6' sur la toile plastifiée, au lieu de former une bande mince continue, peuvent présenter une surface discontinue comportant en alternance des zones longitudinales où le plastique est fondu et des zones où il ne l'est pas. Les soudures de ce type permettent une meilleure articulation autour d'un fourreau de deux lés consécutifs et plus particulièrement, de deux panneaux consécutifs comprenant une couche 13 de matériau isolant prise en sandwich entre deux lés 12, 12' de toile plastifiée ou de matériau transparent.

La présente invention n'est pas limitée aux exemples de réalisation qui viennent d'être décrits ; elle est au contraire susceptible de variantes et de mofidications qui apparaîtront à l'homme de l'art. En particulier, le procédé permet de réaliser des rideaux dont l'assemblage est obtenu par collage ou par couture, moyennant que l'on substitue au poste de soudage du dispositif de fabrication décrit ci-dessus un poste de collage ou de couture.

## Revendications

1. Procédé de fabrication d'un rideau relevable verticalement en matériau en feuille souple de largeur L rigidifié à intervalles réguliers par des barres d'armature horizontales (9) placées dans des fourreaux formés dans le rideau, du type des rideaux de porte de manutention, le rideau étant constitué principalement de lés parallèles, les fourreaux étant formés aux niveaux des jonctions entre les lés, et comportant des premiers et des seconds rubans assujettis aux lés de part et d'autre du rideau au niveau desdites jonctions pour recouvrir lesdits fourreaux, les lés et les rubans ayant une longueur sensiblement égale à la largeur L du rideau, caractérisé en ce qu'il comporte les étapes suivantes :

— on dispose des premiers rubans (10) sur un plan de référence, parallèlement entre eux, à une distance entre eux égale à la largeur des lés, et avec leurs extrémités alignées ;

— on dispose sur le plan de référence les lés (12) entre lesdits premiers rubans, les bords des lés recouvrant les bords des bandes sur une largeur (β) de surface de recouvrement ;

— on dispose des seconds rubans sur les premiers, les bords des seconds rubans recouvrant sur une largeur (β) de surface de recouvrement les bords desdits lés (12) ;

— on assujettit les lés (12, 12', 13) et les rubans (10, 10') qui les prennent en sandwich, sur deux lignes d'assujettissement formées sur les surfaces de recouvrement (β).

2. Procédé de fabrication selon la revendication 1, caractérisé en ce qu'avant l'étape d'assujettissement, on procède à une étape de maintenir les lés (12, 12') et les rubans (10, 10') les uns par rapport aux autres sur le plan de référence.

3. Procédé de fabrication selon la revendication 8, où les rubans (10, 10') et les lés (12, 12', 13) sont coupés à une longueur supérieure à la largeur L souhaitée du rideau, caractérisé en ce qu'il comporte en outre, après l'étape d'assujettissement des lés (12, 12', 13) les uns aux autres, l'étape de couper les bords du rideau ainsi obtenu de façon qu'il ait la largeur L souhaitée.

4. Procédé de fabrication selon une des revendications 1 à 3, caractérisé en ce qu'il comporte en outre, après l'étape de positionnement des premiers rubans (10) et des lés (12, 12', 13) les uns par rapport aux autres, l'étape de disposer perpendiculairement auxdits rubans et lés, au moins deux sangles (19) résistantes à la traction.

5. Procédé de fabrication selon des revendications 1 à 4, caractérisé en ce qu'il comporte en outre, après l'étape de positionnement des premiers rubans (10) et des lés (12, 12', 13) les uns par rapport aux autres, l'étape de disposer entre deux lés consécutifs une barre d'armature (9).

6. Procédé de fabrication selon des revendications 1 à 5, caractérisé en ce qu'il comporte en outre, après l'étape d'assujettissement des rubans (10, 10') et des lés (12, 12', 13) les uns aux autres, les étapes de :
– plier le rideau en accordéon, un pli étant formé au niveau de chaque fourreau et au milieu de chaque lé (12, 12', 13)
– étuver le rideau ainsi plié pour provoquer une déformation irréversible du matériau souple dont est fait ledit rideau au niveau de chaque pli.

7. Procédé de fabrication selon une des revendications 1 à 6, caractérisé en ce que l'assujettissement des rubans (10, 10') et des lés (12, 12', 13) les uns aux autres se fait par soudage.

8. Procédé de fabrication selon une des revendications 1 à 6, caractérisé en ce que l'assujettissement des rubans (10, 10') et des lés (12, 12', 13) les uns aux autres se fait par couture.

9. Procédé de fabrication selon une des revendications 1 à 6, caractérisé en ce que l'assujettissement des rubans (10, 10') et des lés (12, 12', 13) les uns aux autres se fait par collage.

10. Procédé de fabrication selon la revendication 7, où les soudures résultant du soudage ont la forme de bandes minces, caractérisé en ce que lesdites soudures présentent une surface discontinue comportant en alternance des zones longitudinales où le matériau des lés (12, 12', 13) et/ou des rubans (10) est fondu et des zones où il ne l'est pas.

11. Procédé de fabrication selon une des revendications 1 à 10, n caractérisé en ce que le matériau dont sont faits les lés est de la toile plastifiée.

12. Procédé de fabrication selon une des revendication 1 à 10, ne comportant qu'un lé entre chaque groupe de deux barres d'armature (9), caractérisé en ce que ledit lé est fait d'un matériau transparent.

13. Procédé de fabrication selon une des revendications 1 à 10, ne comportant qu'un lé entre chaque groupe de deux barres d'armature (9), caractérisé en ce qu'il comporte des lés en toile plastifiée et des lés transparents.

## Ansprüche

1. Verfahren zur Fertigung von Rolläden vom Typ industrieller Rolladentüren aus flexiblem Material der Breite L, in regelmäßigen Abständen durch waa-grechte Versteifungsstreben (9) in dazu im Rollladen vorgesehenen Hohlräumen verstärkt, wobei der Rolladen im wesentlichen aus parallel angeordneten Lamellen besteht, an deren Verbindungsstellen die Hohlräume für die Versteifungen vorgesehen sind, sowie aus jeweils zwei Bändern zum Verschließen der o.a. Hohlräume an beiden Enden der Lamellen, wobei die Länge der Lamellen und der Bänder weitgehend mit der Breite L des Rolladens übereinstimmt, dadurch gekennzeichnet, daß das Fertigungsverfahren aus folgenden Phasen besteht :
– Anbringen der unteren Bänder (10) auf der Bezugsfläche in paralleler Anordnung zueinander in einem Abstand, der der Breite der Lamellen entspricht und die beiden Enden aneinandergepaßt ;
– Anbringen der oberen Bänder, wobei deren Ränder die Ränder der o.a. Lamellen (10) um die Breite (β) überlappen ;
– Verbinden der Lamellen (12, 12', 13) mit den Bändern (10, 10') in Sandwichbauweise auf den beiden durch die Überlappungsflächen (β) gebildeten Verbindungsflächen.

2. Fertigungsverfahren nach Patentanspruch 1, dadurch gekennzeichnet, daß vor der Verbindungsphase eine Phase "Positionieren der Lamellen (12, 12') und Bänder (10, 10') zueinander" auf der Bezugsfläche erfolgt.

3. Fertigungsverfahren nach Patentanspruch 8, bei dem die Bänder (10, 10') und Lamellen (12, 12', 13) in einer Länge zugeschnitten sind, die größer ist als die vorgesehene Breite L des Rolladens, dadurch gekennzeichnet, daß nach der Phase "Verbindens der Lamellen (12, 12', 13)" eine Phase "Zuschneiden der Rolladenränder auf die gewünschte Breite L" folgt.

4. Fertigungsverfahren nach einem beliebigen der Patentansprüche 1 bis 3, dadurch gekennzeichnet, daß zusätzlich auf die Phase "Positionieren der unteren Bänder (10) und der Lamellen (12, 12', 13) zueinander" eine Phase "Anbringen von mindestens zwei reißfesten Gurten (19) senkrecht zur Längsachse der Bänder und Lamellen" folgt.

5. Fertigungsverfahren nach einem beliebigen der Patentansprüche 1 bis 4, dadurch gekennzeichnet, daß zusätzlich auf die Phase "Positionieren der unteren Bänder (10) und der Lamellen (12, 12', 13) zueinander" eine Phase "Einsetzen einer Versteifung (9) zwischen zwei aufeinanderfolgende Lämellen" folgt.

6. Fertigungsverfahren nach einem beliebigen der Patentansprüche 1 bis 4, dadurch gekennzeichnet, daß es zusätzlich zu der Phase "Positionieren der unteren Bänder (10) und der Lamellen (12, 12', 13) zueinander" folgende Phasen enthält :
– Falten des Rolladens in Zickzackform, wobei jede Faltung in der Mitte des Hohlraumes und in der Mitte der Lamelle (12, 12', 13) erfolgt,

– Erwärmen des so gefalteten Rolladens zur dauerhaften Formung des flexiblen Materials entsprechend der o.a. Faltung.

7. Fertigungsverfahren nach einem beliebigen der Patentansprüche 1 bis 6, dadurch gekennzeichnet, daß die Phase "Positionieren der unteren Bänder (10) und der Lamellen (12, 12', 13) zueinander" durch Verschweißen erfolgt.

8. Fertigungsverfahren nach einem beliebigen der Patentansprüche 1 bis 6, dadurch gekennzeichnet, daß die Phase "Positionieren der unteren Bänder (10) und der Lamellen (12, 12', 13) zueinander" durch Zusammennähen erfolgt.

9. Fertigungsverfahren nach einem beliebigen der Patentansprüche 1 bis 6, dadurch gekennzeichnet, daß die Phase "Positionieren der unteren Bänder (10) und der Lamellen (12, 12', 13) zueinander" durch Verkleben erfolgt.

10. Fertigungsverfahren nach Patentanspruch 7, bei dem die Schweißnähte aus schmalen Bändern bestehen, dadurch gekennzeichnet, daß diese Schweißnähte eine Oberfläche mit abwechselnden Bereichen in Längsrichtung aufweisen, in denen das Material der Lamellen (12, 12', 13) bzw. der Bänder (10) abwechselnd verschmolzen bzw. nicht verschmolzen ist. .

11. Fertigungsverfahren nach einem beliebigen der Patentansprüche 1 bis 10, dadurch gekennzeichnet, daß die Lamellen aus plastifiziertem Gewebe bestehen.

12. Fertigungsverfahren nach einem beliebigen der Patentansprüche 1 bis 10, bei dem nur eine Lamelle zwischen je zwei Versteifungun (9) liegt, dadurch gekennzeichnet, daß diese Lamellen aus durchsichtigem Material bestehen.

13. Fertigungsverfahren nach einem beliebigen der Patentansprüche 1 bis 10, bei dem nur eine Lamelle zwischen je zwei Versteifungen (9) liegt, dadurch gekennzeichnet, daß diese Lamellen aus plastifizierem Gewebe oder aus durchsichtigem Material bestehen.

**Claims**

1. A method of fabricating a vertically lifting curtain made of a material in a flexible sheet of width L stiffened at regular intervals by horizontal reinforcing bars (9) placed in sheaths formed in the curtain, of the type of curtains for goods handling door, said curtain being mainly composed of parallel strips, said sheaths being formed at the level of the junctions between the strips, and including first and second tapes fastened to said strips on both sides of said curtain at the level of said junctions so as to overlap said sheaths, said strips and said tapes having a length substantially equal to the width L of the curtain, caracterized in that it includes the following steps :

– disposing first tapes (10) in parallel on a reference plane, with a distance between them being equal to the width of said strips, and with their ends aligned ;
– disposing said strips (12) on said reference plane between said first tapes, with the edges of said strips overlapping the edges of said tapes over a width (β) of an overlap margin ;
– disposing second tapes on said first tapes, with the edges of said second tapes overlapping the edges of said strips (12) over a width (β) of an overlap margin ;
– fastening said strips (12, 12', 13) and said tapes (10, 10') by sandwiching them together, over two fastening lines being formed on said overlap margins (β).

2. A fabrication method according to claim 1, caracterized in that, before the step of fastening, a step is proceeded, in which said strips (12, 12') and said tapes (10, 10') are held relative to one another on said reference plane.

3. A fabrication method according to claim 1, wherein said tapes (10, 10') and said strips (12, 12', 13) are cut to a length which is longer than the desired width L of the curtain, caracterized in that it further includes, after the step of fastening said strips (12, 12', 13) to one another, the step of cutting the edges of the curtain obtained in this way, so that it had the desired width L.

4. A fabrication method according to one of claims 1 to 3, caracterized in that it further includes, after the step of positioning said first tapes (10) and said strips (12, 12', 13) relative to one another, the step of disposing at least two traction resisting straps (19) prependicular to said tapes and straps.

5. A fabrication method according to one of claims 1 to 4, caracterized in that it further includes, after the step of positioning said first tapes (10) and said strips (12, 12', 13) relative to one another, the step of disposing a reinforcing bar (9) between two consecutive strips.

6. A fabrication method according to one of claims 1 to 5, caracterized in that it further includes, after the step of fastening said tapes (10, 10') and said strips (12, 12', 13) to one another, the step of :
– folding said curtain concertina-like, with a fold at each sheath and another fold in the middle of each strip,
– backing the folded curtain so as to give rise along each fold to irreversible deformation of the flexible material from which the curtain is made.

7. A fabrication method according to one of claims 1 to 6, wherein said tapes (10, 10') and said strips (12, 12', 13) are fastened to one another by welding.

8. A fabrication method according to one of claims 1 to 6, wherein said tapes (10, 10') and said strips (12, 12', 13) are fastened to one another by sewing.

9. A fabrication method according to one of claims 1 to 6, wherein said tapes (10, 10′) and said strips (12, 12′, 13) are fastened to one another by gluing.

10. A fabrication method according to claim 7, wherein the welds resulting from the welding are in the form of thin strips, caracterized in that said welds have a discontinuous surface comprising alternating longitudinal zones where the material of said strips (12, 12′, 13) and/or of said tapes (10) has melted and zones where it has not melted.

11. A fabrication method according to one of claims 1 to 10, wherein said strips and said tapes are made of plastified cloth.

12. A fabrication method according to one of claims 1 to 10, including only one strip between a pair of successive reinforcing bars (9), wherein said strip is made of a transparent material.

13. A fabrication method according to one of claims 1 to 10, including only one strip between a pair of successive reinforcing bars (9), caracterized in that it includes strips made of plastified cloth and transparent strips.

Fig.1

Fig. 2

Fig. 3

*Fig: 4*

*Fig: 5*

*Fig: 6*